# EUROPÄISCHE PATENTSCHRIFT

(11) **EP 2 212 134 B1**
(45) Veröffentlichungstag und Bekanntmachung des Hinweises auf die Patenterteilung: **13.07.2011**
(21) Anmeldenummer: 08841212.7
(22) Anmeldetag: 27.10.2008
(51) Int. Cl.: B60G 21/05, B60G 9/00, B60B 35/02

(54) **ACHSAGGREGAT FÜR EIN NUTZFAHRZEUG UND VERFAHREN ZUR HERSTELLUNG EINES SOLCHEN ACHSAGGREGATS**
AXLE ASSEMBLY FOR A COMMERCIAL VEHICLE AND METHOD FOR PRODUCING SAID AXLE ASSEMBLY
GROUPE D'AXES POUR UN VÉHICULE UTILITAIRE ET PROCÉDÉ POUR FABRIQUER UN GROUPE D'AXES DE CE TYPE

(30) Priorität: 27.10.2007 DE 102007051501
(43) Veröffentlichungstag der Anmeldung: 04.08.2010
(73) Patentinhaber: Schmitz Cargobull AG, 48341 Altenberge (DE)
(72) Erfinder: SCHMITZ, Peter, 48341 Altenberge (DE); EBERT, Jörg, 50858 Köln (DE)
(74) Vertreter: Cohausz & Florack
(86) Internationale Anmeldenummer: PCT/EP2008/064536
(87) Internationale Veröffentlichungsnummer: WO 2009/053491

(56) Entgegenhaltungen:
- EP-A- 0 713 791
- EP-A- 1 036 680
- DE-A1- 19 603 764
- DE-A1- 19 929 057
- DE-A1-102005 038 274
- FR-A- 2 888 559

## Beschreibung

Die Erfindung betrifft ein Achsaggregat für eine nicht angetriebene Achse eines Nutzfahrzeugs, mit einer aus einem ersten Metallwerkstoff gefertigten Achse und mit mindestens einem aus einem zweiten Metallwerkstoff gefertigten Längslenker, der einen Verbindungsabschnitt mit einer Aufnahme aufweist, in der die Achse mit einem hohlen Kopplungsabschnitt so sitzt, dass die Achse und der Längslenker drehfest miteinander verbunden sind. Achsaggregate dieser Art werden beispielsweise an Anhängern oder Aufliegern für Lastkraftwagen und Sattelzüge eingesetzt.

Solche auch als "Starrachsen" bezeichnete Achskonstruktionen sind in großer Zahl bekannt. Üblicherweise umfassen sie einen Längslenker, der mit seinem einen Ende über ein geeignetes Gelenk schwenkbar mit dem Fahrzeugrahmen verkoppelt und auf der anderen Seite über eine Feder-/Dämpfer-Kombination an dem Fahrzeug abgestützt ist. Auf diese Weise ist eine einfache federnde Lagerung einer Achse ermöglicht, die den beispielsweise bei Anhängern oder Aufliegern von Lastkraftwagen bisher gestellten Anforderungen gerecht wird. Verbessert werden kann das Fahrverhalten von Achsaggregaten der in Rede stehenden Art dadurch, dass die Achse zumindest abschnittsweise torsionsweich ausgelegt wird, so dass die Bewegungen der die Achse tragenden Längslenker stärker voneinander entkoppelt sind.

Wie in der EP 0 830 959 B1 oder der DE 10 2006 009 441 A1 zusammengefasst, wird die Verbindung zwischen den Längslenkern und der von ihnen getragenen Achse im Stand der Technik beispielsweise durch Klemmung, Verschraubung oder Verschweißung hergestellt. Die Längslenker werden dabei üblicherweise in Stahlguss hergestellt, wogegen die Achsen als Profile aus einem Stahlwerkstoff gefertigt sind.

Nachteilig an den voranstehend erläuterten bekannten Achskonstruktionen ist, dass bei ihnen in der Regel ein hoher Material- und Fertigungsaufwand erforderlich ist, damit insbesondere ihre Lagerung in den Längslenkern die in der Praxis auftretenden hohen Belastungen mit ausreichender Sicherheit aufnehmen kann.

Ein anderes Achsaggregat der voranstehend angegebenen Art ist aus der gattungsbildenden EP 0 713 791 B1 bekannt. Bei einer ersten Variante des in dieser Veröffentlichung beschriebenen Achsaggregats wird ein als Aluminium-Hohlprofil ausgebildeter, an seinen Enden verschlossener Längslenker eingesetzt. An dessen einem Ende wird mittels eines auch als "Hydroforming" bezeichneten Umformverfahrens ein Kopfteil ausgebildet, das anschließend mit einer quer zur Längserstreckung des Längsträgers ausgerichteten Durchgangsöffnung versehen wird.

Beim "Hydroforming" der in der EP 0 713 791 B1 beschriebenen Art wird das zu verformende hohle Bauteil in eine die angestrebte Form des Bauteils abbildende Matrize gelegt und anschließend von innen mit einer unter hohem Druck stehenden inkompressiblen Flüssigkeit beaufschlagt. Das Material des Längslenkers beginnt daraufhin zu fließen, bis es an den Innenflächen der Matrize anliegt. So ist es möglich, an vorgefertigten Profilen mit hoher Präzision bestimmte Formelemente auszubilden, die für die weitere Funktion des jeweils herzustellenden Bauteils benötigt werden.

Um die Durchgangsöffnung in das durch Hydroforming erzeugte Kopfteil des Längslenkers herzustellen, wird beim in der EP 0 713 791 B1 beschriebenen Stand der Technik das im dafür vorgesehenen Bereich vorhandene Wandmaterial des Längslenkers mittels eines spanabhebenden Verfahrens entfernt. Die Form des Öffnungsquerschnitts weicht dabei von der Kreisform ab. Anschließend wird durch die Öffnung des Längsträgers eine Achse gesteckt, deren Außenabmessungen an die Form der Öffnung des Längsträgers so angepasst sind, dass die Achse nach dem Einschieben formschlüssig und drehfest in der Öffnung des Längsträgers sitzt.

Indem das Kopfteil daraufhin mittels eines von außen wirkenden Quetschwerkzeugs zusammengedrückt wird, kann gemäß der EP 0 713 791 B1 der Formschluss zwischen Achse und Längsträger optimiert werden. Demselben Zweck dient es, wenn in der EP 0 713 791 B1 vorgeschlagen wird, die in dem Längslenker sitzende Achse durch Hydroforming aufzuweiten.

Ebenso ist es gemäß der EP 0 713 791 B1 möglich, die drehfeste Verbindung zwischen dem Längsträger und der Achse dadurch zu sichern, dass sie durch Verkleben oder Verschweißen zusätzlich stoffschlüssig oder durch mechanische Verfahren, wie Durchsetzfügen, zusätzlich kraft- und formschlüssig miteinander verbunden werden.

Schließlich können gemäß der EP 0 713 791 B1 mittels Hydroforming die jeweils über den Längsträger frei hinaus ragenden Endabschnitte der Achse jeweils dadurch geformt werden, dass sie zum Anschließen einer Radträgerplatte oder als Aufnahme für ein Gummigelenk einer Federung nutzbar sind.

Die Varianten des in der EP 0 713 791 B1 beschriebenen Standes der Technik, bei denen das Hydroforming zum Einsatz kommt, gehen jeweils von Achsen und Längsträgern aus, die als Strangpressprofile aus einem Aluminiumwerkstoff der in der EP 0 713 791 B1 ebenfalls angegebenen Zusammensetzung gefertigt sind. Gemäß einer zusätzlichen Variante des in der EP 0 713 791 B1 beschriebenen Standes der Technik ist es vorgesehen, den Längslenker als Gussteil vorzufertigen, an dem bereits eine von der Kreisform abweichende Aufnahme für die Achse ausgebildet ist. Die entsprechend geformte Achse wird dann in die Aufnahme des Längslenkers gesteckt. Über die die von der Kreisform abweichende Querschnittsform von Achse und Längslenkeraufnahme ist dabei eine verdrehsichere Halterung der Achse in der Aufnahme gesichert. Die eigentliche Verbindung zwischen Längslenker und Achse erfolgt gemäß der EP 0 713 791 B1 dann über Kleben, Schweißen oder Schrumpfen.

Der Vorteil der verschiedenen aus der EP 0 713 791 B1 bekannten Gestaltungsvarianten eines Achsaggregates besteht darin, dass es bei ihnen auf relativ einfache Weise möglich ist, die Achse so zu formen und zu befestigen, dass sie einerseits einen nach Art einer Torsionsfeder verwendbaren, torsionsweichen Mittelabschnitt besitzt, andererseits aber über ihre den Längslenkern jeweils zugeordneten Kopplungsabschnitte sicher in den Längslenkern gehalten ist.

Diesen Vorteilen steht der Nachteil gegenüber, dass trotz der Nutzung moderner Fertigungstechniken, wie dem Hydroforming, die Herstellung des bekannten Aggregats aufwändig ist. Darüber hinaus ist ein gemäß der EP 0 713 791 B1 hergestelltes Achsaggregat nicht geeignet, die im praktischen Einsatz eines Nutzfahrzeugs auftretenden hohen Belastungen mit ausreichender Sicherheit aufzunehmen.

Vor dem Hintergrund des voranstehend erläuterten Standes der Technik lag der Erfindung die Aufgabe zu Grunde, ein Achsaggregat und ein Verfahren zu seiner Herstellung zu schaffen, das sich kostengünstig herstellen lässt und bei dem auf einfache Weise eine optimal betriebssichere Verbindung zwischen den einzelnen Bauteilen "Längslenker" und "Achse" gewährleistet ist.

In Bezug auf das Achsaggregat ist diese Aufgabe erfindungsgemäß dadurch gelöst worden, dass es gemäß Anspruch 1 ausgebildet ist. Vorteilhafte Ausgestaltungen eines erfindungsgemäßen Achsaggregats sind in den von Anspruch 1 abhängigen Ansprüchen angegeben.

In Bezug auf das Verfahren besteht die Lösung der oben genannten Aufgabe erfindungsgemäß darin, dass bei der Herstellung eines gemäß der Erfindung ausgebildeten Achsaggregats mindestens die in Anspruch 9 angegebenen Arbeitschritte durchlaufen werden.

Ein erfindungsgemäßes Achsaggregat umfasst in Übereinstimmung mit dem eingangs erläuterten Stand der Technik eine aus einem ersten Metallwerkstoff, insbesondere einem Stahlwerkstoff, gefertigte Achse und mindestens einen aus einem zweiten Metallwerkstoff, insbesondere Gusseisen, gefertigten Längslenker.

Der Längslenker eines erfindungsgemäßen Achsaggregats weist einen Verbindungsabschnitt auf, in den eine Aufnahme eingeformt ist. In dieser Aufnahme sitzt die Achse mit einem hohl ausgebildeten Kopplungsabschnitt.

Die in den Verbindungsabschnitt des Längslenkers eingeformte Aufnahme ist dabei so ausgebildet, dass der Verbindungsabschnitt den Kopplungsabschnitt der Achse zumindest so weit umgreift, dass die Achse sicher in der Aufnahme gehalten ist. Ein besonders sicherer Halt kann dabei dadurch gewährleistet werden, dass die Aufnahme als Öffnung ausgebildet ist, in der die Achse sitzt und die den Kopplungsabschnitt vollständig umgibt.

Des Weiteren sind bei einem erfindungsgemäßen Achsaggregat die Achse und der Längslenker mindestens durch Kraftschluss drehfest miteinander verbunden. Erfindungsgemäß sind dazu die Werkstoffe, aus denen der Verbindungsabschnitt des Längslenkers und der Kopplungsabschnitt der Achse hergestellt sind, so aufeinander abgestimmt, dass mindestens eine der folgenden Bedingungen erfüllt ist:
a) Der Elastizitätsmodul E des Metallwerkstoffs, aus dem der Verbindungsabschnitt des Längslenkers besteht, ist geringer als der Elastizitätsmodul E des Metallwerkstoffs des von ihm umgriffenen Kopplungsabschnitts der Achse.
b) Die Bruchfestigkeit Rm des Metallwerkstoffs des Längslenker-Verbindungsabschnittes ist größer als die Bruchfestigkeit Rm des Metallwerkstoffs des Kopplungsabschnitts der Achse.
c) Die Streckgrenze Rₑₛ oder - sofern der betreffende Metallwerkstoff des Verbindungsabschnitt keine ausgeprägte Streckgrenze aufweist - ersatzweise die Dehngrenze R_{p0,2} des Metallwerkstoffs, aus dem der Verbindungsabschnitt des Längslenkers geformt ist, ist höher als die Streckgrenze Rₑₛ bzw. Dehngrenze R_{p0,2} des Metallwerkstoffs, aus dem der von ihm umgriffene Kopplungsabschnitts der Achse besteht.

Jede der voranstehend genannten Bedingungen a) - c) kann dabei alternativ oder ergänzend, d.h. alleine oder in Kombination mit jeweils mindestens einer anderen dieser Bedingungen a) - c) erfüllt sein. Unter der Streckgrenze Rₑₛ wird hier wie üblich diejenige Spannung verstanden, bei der das Fließen des jeweiligen Metallwerkstoffs einsetzt, ohne dass die anliegende Spannung weiter erhöht wird. Bei der Dehngrenze R_{p0,2} handelt es sich um diejenige (einachsige) mechanische Spannung, bei der die auf die Anfangslänge der Probe bezogene bleibende Dehnung nach Entlastung 0,2 % beträgt.

Erst der erfindungsgemäß vorgegebene, mindestens im Bereich ihrer Verbindung bestehende Unterschied der elastischen Verformbarkeit von Längsträger und Achsträger erlaubt es, Achse und Längslenker eines Achsaggregats alleine durch Kraftschluss so fest miteinander zu verbinden, dass die Verbindung die in der Praxis auftretenden Belastungen mit der notwendigen Sicherheit aufnehmen kann. Indem die Streck- bzw. Dehngrenze des außenliegenden Verbindungsabschnitts des Längsträgers größer ist als die Streck- bzw. Dehngrenze des innenliegenden Kopplungsabschnitts der Achse und / oder der Elastizitätsmodul des Metallwerkstoffs, aus dem mindestens der Verbindungsabschnitt des Längslenkers besteht, geringer ist als der Elastizitätsmodul des Metallwerkstoffs, aus dem der von dem Längslenker-Verbindungsabschnitt umgriffene Rohrabschnitt der Achse besteht, und / oder die Bruchfestigkeit Rm des Materials des Längslenker-Verbindungsabschnittes größer ist als die Bruchfestigkeit Rm des von ihm umgriffenen Kopplungsabschnitts der Achse, kann sich der Verbindungsabschnitt nach einer Aufweitung im entlasteten Zustand noch im Bereich seiner elastischen Verformbarkeit befinden, so dass der Verbindungsabschnitt eine federnd elastische Rückstellkraft auf den von ihm umgriffenen Kopplungsabschnitt der Achse ausübt.

Unter Ausnutzung dieses Zusammenhangs steht bei einem erfindungsgemäßen Achsaggregat der Längslenker in Folge einer Umformoperation mindestens im Bereich seines Verbindungsabschnitts unter einer elastischen Spannung, während die Achse durch ein Aufweiten mindestens im Bereich ihres vom Längslenker umgriffenen Kopplungsabschnitts in einem größeren Maße bleibend plastisch verformt ist.

Bei einem erfindungsgemäßen Achsaggregat ist dementsprechend die Verbindung zwischen dem Längslenker und der Achse in erster Linie dadurch hergestellt, dass die Achse mindestens im Bereich ihres Kopplungsabschnitts bis in den plastischen Bereich bleibend verformt ist, während der den Kopplungsabschnitt umgebende Verbindungsabschnitt des Längslenkers allenfalls teilplastisch verformt ist, also im Verbindungsabschnitt somit also noch eine elastische Rückstellkraft vorhanden ist, durch die eine Pressung zwischen der Außenfläche des Kopplungsabschnitts der Achse und der Innenfläche der Aufnahme des Längslenkers entsteht. Im Ergebnis wird so ein Kraftschluss zwischen der Innenperipherie des Verbindungsabschnitts des Längslenkers und dem anliegenden Kopplungsabschnitt der Achse erzeugt, so dass über die erfindungsgemäß hergestellte kraftschlüssige Verbindung das im praktischen Einsatz von der Achse eingeleitete Torsionsmoment sicher auf den Längslenker übertragen wird.

Die Herstellung eines erfindungsgemäßen Achsaggregats kann auf besonders einfache Weise erfolgen. Dazu werden zunächst eine Achse, die mindestens einen hohlen und von außen zugänglichen Kopplungsabschnitt aufweist, und ein Längslenker zur Verfügung gestellt, der eine Aufnahme für den Kopplungsabschnitt der Achse aufweist, wobei die lichte Weite der Aufnahme in Relation zu den Außenabmessungen des Kopplungsabschnitts der Achse so bemessen ist, dass der Kopplungsabschnitt der Achse mit Spiel in die Aufnahme einführbar ist. Gleichzeitig sind in der bereits erläuterten erfindungsgemäßen Weise die Eigenschaften der Metallwerkstoffe, aus denen der Verbindungsabschnitt des Längslenkers und der Kopplungsabschnitt der Achse bestehen, so aufeinander abgestimmt, dass der E-Modul des Verbindungsabschnitts kleiner ist als der E-Modul des Kopplungsabschnitts und / oder die Bruchfestigkeit des Verbindungsabschnitts größer ist als die Bruchfestigkeit des von ihm im gefügten Zustand umgriffenen Kopplungsabschnitts, und / oder die Streckgrenze Rₑₛ oder - sofern der Metallwerkstoff keine ausgeprägte Streckgrenze aufweist - die Dehngrenze R_{p0,2} des Metallwerkstoffs, aus dem der Verbindungsabschnitt des Längslenkers besteht, höher ist als die Streckgrenze Rₑₛ bzw. Dehngrenze R_{p0,2} des Metallwerkstoffs des von ihm umgriffenen Kopplungsabschnitts der Achse.

Die so zur Verfügung gestellte Achse wird anschließend mit dem Längslenker so zusammengefügt, so dass der Kopplungsabschnitt der Achse in der Aufnahme des Längslenkers sitzt.

Daraufhin wird der Kopplungsabschnitt der Achse aufgeweitet, bis der Fügespalt zwischen der Innenfläche der Aufnahme des Längslenkers und der Außenfläche des Kopplungsabschnitts der Achse geschlossen ist. Über die Weite des Fügespaltes bzw. das nach dem Fügen zwischen Längslenker und Achse vorhandene Spiel kann dabei der Betrag vorgegeben werden, um den der Kopplungsabschnitt verformt wird, bevor auch der Längslenker aufgeweitet wird. Auf diese Weise lässt sich gewährleisten, dass die Verformung des Kopplungsabschnitts im Zuge des Aufweitens jeweils so weit fortschreitet, dass der plastische Bereich sicher erreicht wird.

Die Aufweitung des Kopplungsabschnitts der Achse wird dann fortgesetzt, bis der Verbindungsabschnitt des Längslenkers nach Entlastung elastisch und der Kopplungsabschnitt der Achse bleibend plastisch verformt ist, so dass der Verbindungsabschnitt unter einer elastischen Spannung steht, durch die eine kraftschlüssige Verbindung zwischen dem Längslenker und der Achse bewirkt ist.

Eine maximale Rückstellkraft im Verbindungsabschnitt des Längslenkers ergibt sich, wenn der Verbindungsabschnitt im Zuge der Aufweitung soweit gedehnt wird, dass die im Verbindungsabschnitt herrschenden Spannungen im Bereich seiner jeweiligen Streck- bzw. Dehngrenze liegen. Eine im teilplastischen Bereich liegende Verformung des Verbindungsabschnitts ist so lange akzeptabel, wie gewährleistet ist, dass eine ausreichende Differenzrückfederung für einen Kraftschluss zwischen Längslenker und Achse verbleibt. Wesentlich ist jeweils, dass die Rückfederung des Koppelabschnitts der Achse jeweils geringer ist als die Rückfederung des den Koppelabschnitt umgreifenden Verbindungsabschnitts des Längslenkers.

Die Sicherheit der erfindungsgemäßen Verbindung von Längslenker und Achse kann dadurch weiter gesteigert werden, dass Längslenker und Achse zusätzlich zu der kraftschlüssigen Verbindung formschlüssig miteinander verbunden sind, indem ein Formelement der Achse formschlüssig mit einem korrespondierend geformten Formelement des Längslenkers zusammenwirkt. Bei solchen erfindungsgemäßen Achsaggregaten, bei denen der Längslenker aus einem allenfalls begrenzt kaltverformbaren Material, wie beispielsweise Eisenguss, und mindestens der Kopplungsabschnitt der Achse aus einem besser verformbaren Werkstoff, wie beispielsweise einem Stahl, besteht, kann dies beispielsweise dadurch bewerkstelligt werden, dass das Formelement der Achse ein in radialer Richtung nach außen gerichteter Vorsprung und das korrespondierend geformte Formelement des Längslenkers eine Ausnehmung ist, in die der Vorsprung der Achse formschlüssig greift.

Eine derart gestaltete formschlüssige Verbindung kann in der Praxis dadurch erzeugt werden, dass bereits bei der Vorfertigung des Längslenkers in die Innenfläche der Aufnahme des Längslenkers eine Ausnehmung eingeformt wird. Nach dem Fügen von Längslenker und Achse wird dann an dem Kopplungsabschnitt der Achse ein Vorsprung erzeugt, der in diese Ausnehmung greift.

Der Vorsprung lässt sich praxisgerecht durch eine nach dem Fügen durchgeführte Kaltumformoperation erzeugen. Dazu kann ein in den hohlen Kopplungsabschnitt stempelartiges Werkzeug verwendet werden, das in den Kopplungsabschnitt eingeführt wird und von dem vom Kopplungsabschnitt umgrenzten Innenraum her in radialer Richtung gegen die Außenwand des Kopplungsabschnitts der Achse wirkt. Die Ausnehmung des Verbindungsabschnitts des Längslenkers dient dabei als Matrize, so dass selbsttätig sichergestellt ist, dass der Vorsprung nach Abschluss des Verformungsvorgangs formschlüssig und im Wesentlichen spielfrei in die Ausnehmung greift.

Praktischerweise wird der Vorsprung vor dem Aufweiten des Koppelabschnitts der Achse erzeugt. Beim anschließenden Aufweiten wird dann der Sitz des Vorsprungs in der Aufnahme des Längslenkers zusätzlich optimiert. Abhängig von der zur Verfügung stehenden Anlagentechnik kann es im Hinblick auf eine Minimierung der Bearbeitungszeiten jedoch auch zweckmäßig sein, die Erzeugung des Vorsprungs und die Aufweitung des Kopplungsabschnitts in einem Zuge durchzuführen.

Alternativ ist es denkbar, das Aufweiten des Kopplungsabschnitts der Achse so durchzuführen, dass sich das Material der Achse im Zuge des Aufweitens einschmiegt in die Ausnehmung des Längslenkers und so die formschlüssige Sicherungsverbindung gegen Verdrehen sicherstellt.

Die in der Praxis auftretenden Belastungen können von dem Vorsprung beispielsweise dann besonders gut aufgenommen werden, wenn die Ausnehmung des Längslenkers nach Art einer Nut ausgebildet ist, die zweckmäßigerweise achsparallel zur Längsachse der Aufnahme ausgerichtet ist und in die der Vorsprung der Achse nach Art eines Nutsteins greift.

Eine besonders preisgünstige Ausgestaltung des erfindungsgemäßen Achsaggregats ist dadurch gekennzeichnet, dass die Achse als einstückiges Hohlprofil, insbesondere als Achsrohr, ausgebildet ist. In ein solches Hohlprofil lässt sich beispielsweise ebenfalls durch eine Kaltumformung oder eine mechanische, spanabhebende Bearbeitung ein Torsionsabschnitt erzeugen, der torsionsweicher als der Kopplungsabschnitt der Achse ist. Ist bei einem erfindungsgemäßen Achsaggregat die Achse von zwei jeweils einem ihrer Endabschnitte zugeordneten Längslenkern getragen, so kann der Torsionsabschnitt wie beim Stand der Technik zwischen den Endabschnitten der Achse angeordnet sein. Aufgrund der torsionsweichen Auslegung der bei einem erfindungsgemäßen Achsaggregat zum Einsatz kommenden Achse ist es möglich, zum Abfedern und Dämpfen der im praktischen Einsatz auftretenden Relativbewegungen der Längslenker zum Chassis Bauelemente zu verwenden, deren Baugröße gegenüber den bei konventionellen Achskonstruktionen erforderlichen Bauteilen dieser Art deutlich vermindert ist.

Bei einem erfindungsgemäßen Achsaggregat müssen im Bereich der Verbindung zwischen Längslenker und Achse keine zusätzlichen Bauelemente, wie Spannbügel, Verschraubungen oder Vergleichbares angeordnet werden. Schon dies führt zu einer beträchtlichen Verminderung des für ein erfindungsgemäßes Achsaggregat benötigten Bauraums. Darüber hinaus müssen beim erfindungsgemäßen Achsaggregat keine Schweißarbeiten an der Achse oder dem Längslenker durchgeführt werden, die den Längslenker oder die Achse schwächen könnten. Vielmehr wird dadurch, dass die für die Verbindung von Achse und Längslenker benötigten Kräfte über die relativ großen Kontaktflächen zwischen diesen beiden Bauteilen übertragen werden, günstige Pressungsverhältnisse erreicht. Dies alles erlaubt es, die Wandstärken im Bereich des Verbindungsabschnitts des Längslenkers und die Wandstärke des Achsrohrs insgesamt zu minimieren. Im Ergebnis nimmt ein erfindungsgemäßes Achsaggregat somit insbesondere in Schwenkrichtung des Längslenkers nur einen sehr geringen Raum ein. Dies erlaubt es beispielsweise, den unter dem jeweiligen Fahrzeug vorhandenen Freiraum zu Gunsten des nutzbaren Laderaums des jeweiligen Transportfahrzeugs zu reduzieren.

Praktische Versuche haben gezeigt, dass sich im Fall, dass mindestens der Kopplungsabschnitt der Achse aus einem konventionellen Stahlwerkstoff, wie beispielsweise einem konventionellen Baustahl, wie einer in der EN-10025 normierten Stahlsorte, gefertigt ist, während der Längslenker aus Eisenguss, insbesondere Sphäroguss (Eisenguss mit Kugelgrafit, "GJS") besteht, ein ausreichendes Lastaufnahmevermögen der Achse und des Längslenkers bereits bei einer Wandstärke des Achsrohrs von weniger als 12 mm, insbesondere 8 mm, gewährleistet ist.

Besonders kostengünstig lässt sich ein erfindungsgemäßes Achsaggregat herstellen, wenn, wie bereits erwähnt, der Längslenker aus einem Gussmetallwerkstoff hergestellt ist. Dies gilt insbesondere dann, wenn der Längslenker einstückig ausgebildet ist. Für die kostengünstige gießtechnische Herstellung eignet sich dabei insbesondere ein Eisengusswerkstoff, wobei besonders gute Eigenschaftskombinationen bei Verwendung von Sphäroguss erzielt werden.

Zur Unterstützung des Kraftschlusses zwischen dem Verbindungsabschnitt des Längslenkers und dem Kopplungsabschnitt der Achse können an mindestens einer der einander zugeordneten Fläche von Längslenker und Achse reibungserhöhende Strukturen vorgesehen sein. Diese können so ausgebildet sein, dass über die reibungserhöhenden Strukturen zusätzlich zum Kraftschluss auch ein Formschluss zwischen Längslenker und Achse hergestellt ist.

An dem bei einem erfindungsgemäßen Achsaggregat vorgesehenen Längslenker kann mindestens eine Konsole zum Ankoppeln eines Funktionselements, wie eines Luftfederbalgs, eines Stoßdämpfers, eines Bauteils einer Bremsanlage oder eines Bauteils einer Achsliftanlage, ausgebildet sein.

Eine weitere zu einer überraschenden Steigerung der Festigkeit der Verbindung zwischen der Achse und dem Längslenker führende Ausgestaltung der Erfindung ist dadurch gekennzeichnet, das die mindestens kraftschlüssige Verbindung zwischen dem Längslenker und dem von ihm umgriffenen Abschnitt der Achse im Neuzustand derart bemessen ist, dass es im Einsatz des Achsaggregats zu einer im Mikrometerbereich liegenden Relativbewegung zwischen der Achse und dem Längslenker kommt, durch die sich im Fügespalt festsitzender, die Relativbewegung im Weiteren erschwerender Abrieb bildet. Bei dieser Ausgestaltung der Erfindung wird die kraftschlüssige Verbindung zwischen dem Längslenker und der Achse gezielt so ausgelegt, dass es ausgehend vom Neuzustand der Verbindung in Folge von Mikrobewegungen zu so genannter "Fretting Corrosion" (Passungsrost) kommt. Durch diese Form der Korrosion bilden sich im Fügespalt metallischer Abrieb und Oxide. Diese Partikel setzen den Fügespalt mit zunehmender Gebrauchsdauer immer weiter zu mit der Folge, dass die Verbindung zwischen dem Längslenker und der Achse immer fester wird.

Für das Aufweiten des Kopplungsabschnitts der Achse eignet sich insbesondere das Innenhochdruckumformen. Das Aufweiten von zylindrischen Körpern mit Hilfe eines über Flüssigkeiten aufgebrachten Innendrucks ist an sich bekannt. Beispielsweise können auf Hohlwellen Funktionselemente durch Innendruckumformung befestigt werden (vgl. DE 10 2005 007 143 A1).

Im Fall, dass der Längslenker gießtechnisch, insbesondere aus Eisenguss als ein Stück hergestellt ist, und das erfindungsgemäße Achsaggregat neben dem Längslenker zusätzlich eine Luftfeder aufweist, die einen Rollbalg mit einer Abrollfalte und einen vom Rollbalg getragenen Abrollkolben umfasst, der unter Abrollen der Abrollfalte in einer Hubbewegung über einen begrenzten Hubweg in den Rollbalg hinein und aus ihm heraus bewegbar ist, wobei der Abrollkolben an seiner freien, aus dem Rollbalg herausweisenden Stirnseite einen Steckkörper trägt, über den er auf einem Tragarm des Längslenkers im normalen Fahrbetrieb abgestützt ist, besteht eine weitere für die Praxis besonders vorteilhafte Ausgestaltung der Erfindung darin, dass der Längslenker einen Lenkerarm, der ein Lager zum schwenkbaren Lagern des Längslenkers am Rahmen des Fahrzeugs, eine Aufnahme für eine Achse des Fahrzeugs sowie einen Tragarm aufweist, in den eine korrespondierend zum Steckkörper des Abrollkolbens geformte Ausnehmung eingeformt ist, in der der Steckkörper des Abrollkolbens in normaler Fahrstellung des Längslenkers so sitzt, dass die Ausnehmung den Steckkörper in einer quer zur Richtung seiner Hubbewegung ausgerichteten Richtung festlegt, während er in Richtung des Rollbalgs frei beweglich ist. Bei dieser Ausgestaltung eines erfindungsgemäßen Achsaggregats sind somit nicht nur die in diesem Fall für die Funktion des Längslenkers selbst erforderlichen Formelemente, wie Lenkerarm, Tragarm und Achsaufnahme integriert, sondern erfindungsgemäß auch eine Aufnahme, über die eine formschlüssige Verbindung zwischen dem Abrollkolben der Luftfederung und dem Längslenker während des normalen Fahrbetriebes besteht. Diese Verbindung ist dabei so ausgelegt, dass sich der Abrollkolben selbsttätig vom Längslenker trennt, wenn der Längslenker bei vollständiger Entlastung der jeweiligen Fahrzeugachse über eine maximale Absenkstellung des Abrollkolbens hinaus verschwenkt wird. Auf diese Weise können bei minimaler Bauteilezahl und dementsprechend minimiertem Herstellungsaufwand die Vorteile des aus der DE 42 03 372 C1 grundsätzliche bekannten Prinzips einer Verkopplung von Luftfeder und Längslenker genutzt werden, ohne dass dazu das nutzbare Volumen der Luftfeder eingeschränkt oder zusätzlich Bauelemente, wie ein am Trägerarm des Längslenkers zu befestigender Zentrierkegel oder Vergleichbares, erforderlich sind.

Nachfolgend wird die Erfindung anhand einer Ausführungsbeispiele darstellenden Zeichnung näher erläutert. Es zeigen jeweils schematisch:
- Fig. 1: ein Achsaggregat in einer perspektivischen Ansicht;
- Fig. 2: einen Ausschnitt des Achsaggregats in einer horizontal längsgeschnittenen Ansicht;
- Fig. 3: den Ausschnitt gemäß Fig. 1 in ungeschnittener Draufsicht;
- Fig. 4a-4c: eine Darstellung der bei der Herstellung des in den Figuren 1 bis 3 dargestellten Achsaggregats absolvierten Arbeitsschritte;
- Fig. 5: ein Achsaggregat für einen Auflieger eines Sattelzuges in perspektivischer Ansicht;
- Fig. 6: einen Ausschnitt des Achsaggregats in einer vertikal längsgeschnittenen Ansicht;
- Fig. 7: einen bei dem Achsaggregat eingesetzten Längslenker in einer horizontal längsgeschnittenen Ansicht;
- Fig. 8a-8d: das Achsaggregat während verschiedener Stufen seiner Herstellung in einer Fig. 5 entsprechenden ausschnittsweisen Schnittdarstellung.

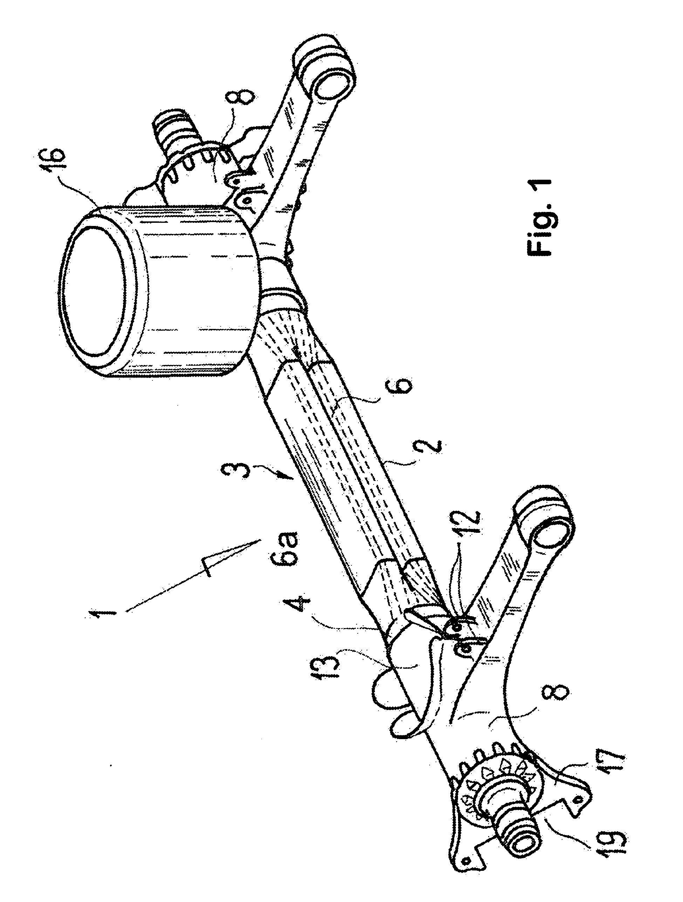

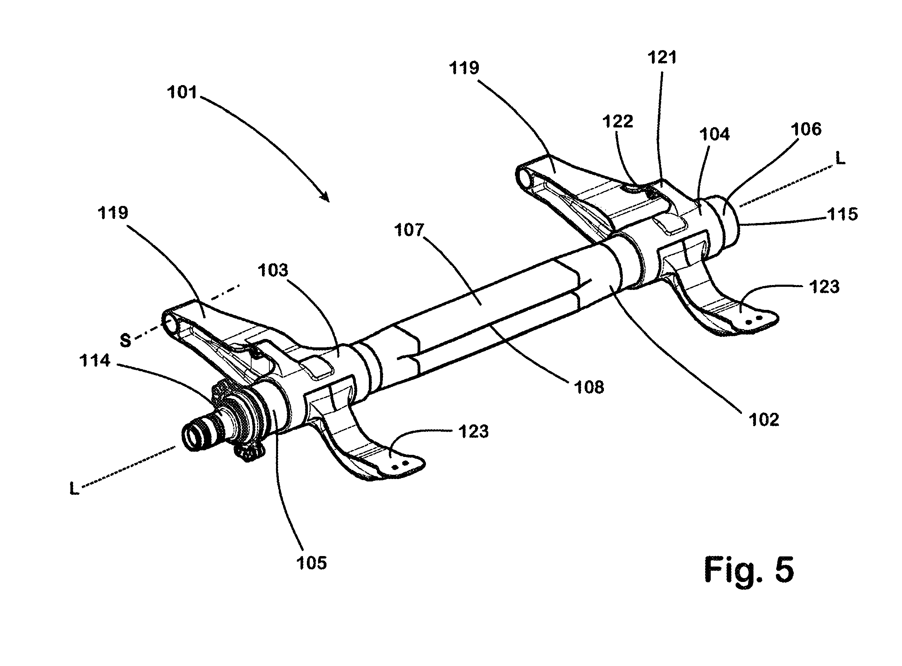

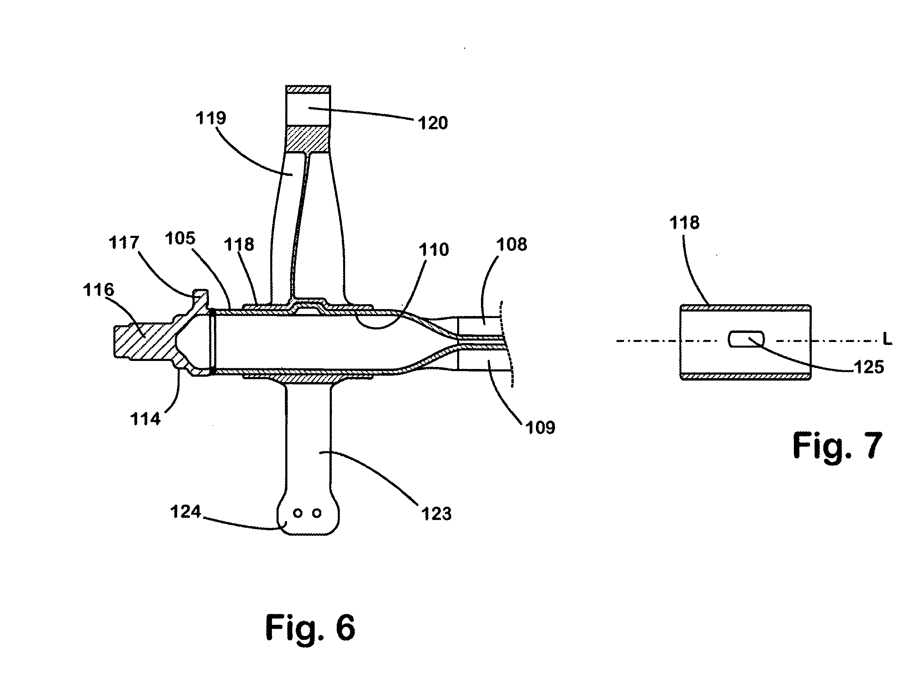

Das in den Figuren 1 bis 3 dargestellte Achsaggregat 1 und das in den Figuren 5 bis 8d dargestellte Achsaggregat 101 sind jeweils Teil einer nichtangetriebenen Achse eines hier nicht gezeigten Aufliegers für einen ebenfalls nicht dargestellten Sattelzug.

Das Achsaggregat 1 umfasst dabei eine als Achsprofilelement ausgebildete Achse 2, die rohrförmig ausgebildet sein kann. An den Enden der Achse 2 ist jeweils ein Längslenker 8 angebracht.

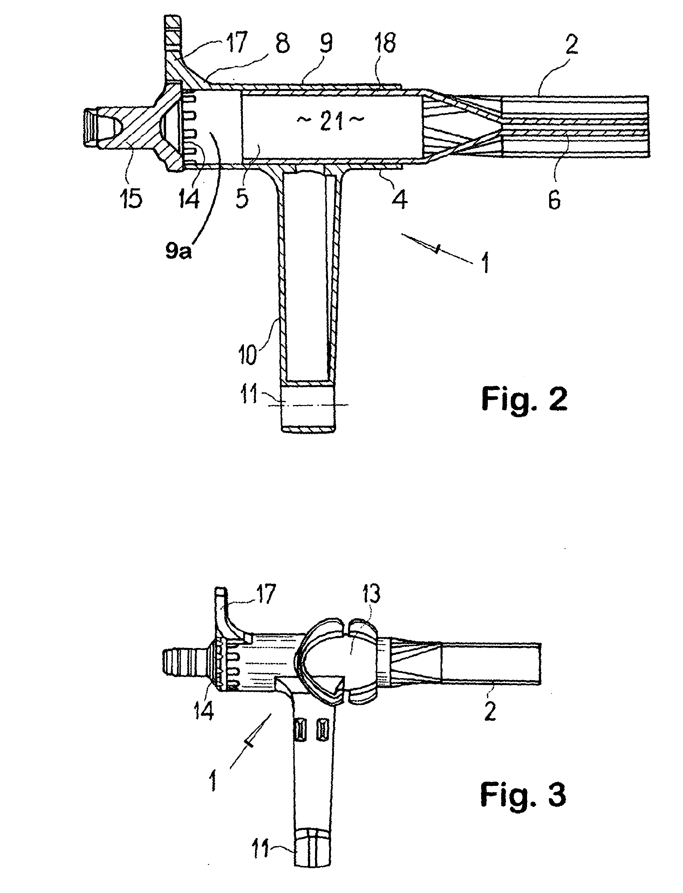

Die Achse 2 ist aus einem hohlen Stahlblechprofil hergestellt und endet in zwei endseitigen Kopplungsabschnitten 4, von denen einer in Fig. 2 dargestellt ist. Die endseitigen Kopplungsabschnitte 4 weisen die Form eines Hohlprofils 5 auf, welches zu seinem freien Ende hin offen ist.

Die von einer Seite des Fahrzeugs zur anderen reichende Achse 2 ist in ihrem Mittelbereich abweichend vom Kopplungsabschnitt 4 im Querschnitt etwa quadratisch geformt und mit eingedrückten Nutverformungen 6 versehen, so dass ein Torsionsabschnitt 6a gebildet ist, in dem das jeweilige Torsionswiderstandsmoment kleiner ist als in den Kopplungsabschnitten 4 der Achse 2. Diese Formgebung der Achse 2 erlaubt demnach eine auf Torsion der Achse 2 beruhende Drehfederung der endseitig verbundenen Elemente.

Die Achse 2 trägt an ihrem zylindrisch ausgebildeten endseitigen Kopplungsabschnitt 4 je einen Längslenker 8, von denen einer in den Fig. 2 und 3 dargestellt ist. In der geschnittenen Darstellung gemäß Fig. 2 ist zu erkennen, dass der Längslenker 8 einen nach Art einer Hülse ausgebildeten, eine Aufnahme 9a umgebenden Verbindungsabschnitt 9 mit einem daran befestigten, in Radialrichtung abstehenden Lenkerarm 10 umfasst.

Der Längslenker 8 mit seinen bereits beschriebenen und noch zu beschreibenden Formteilen ist als einstückiges Gussteil im Sphärogussverfahren hergestellt, wobei als Gusswerkstoff vorzugsweise GJS 600 verwendet wird. Auch andere Stahl- oder Eisengusssorten können im Bereich der Fügung verwendet werden.

Der Lenkerarm 10 endet an seinem freien Ende in einer Muffe 11, die mit einer Querwelle in einem Abstützbock (nicht dargestellt) drehbeweglich zu haltern ist. Zwei mit Bohrungen versehene Halter 12 dienen der Halterung eines Stoßdämpfers (nicht dargestellt). Weiterhin ist an dem Längslenker 8 ein Tragteller 13 vorhanden, der zur Auflage eines Luftfederbalgs 16 dient. Ferner ist ein Bremsträger 17 einstückig mit dem Gussteil hergestellt. Der Bremsträger 17 enthält Öffnungen 19 zur Aufnahme der Gleitelemente einer Schwimmsattelscheibenbremse (nicht gezeigt).

Mit dem Längslenker 8 ist außerdem über einen Schraubkranz 14 ein separat vorgefertigter Achsstummel 15 verbunden, auf den in konventioneller Weise über eine Lagerung ein Rad (nicht gezeigt) rotierbar montiert werden kann.

Der Verbindungsabschnitt 9 hat eine Aufnahme mit einer Innenfläche 18, die eine Kreiszylinderfläche bildet. In der Aufnahme 9a ist der jeweils zugeordnete endseitige Kopplungsabschnitt 4 der Achse 2 drehfest eingefügt. Hierzu ist ein druckbegrenztes Innenhochdruckfügen als Fügeverfahren angewendet worden.

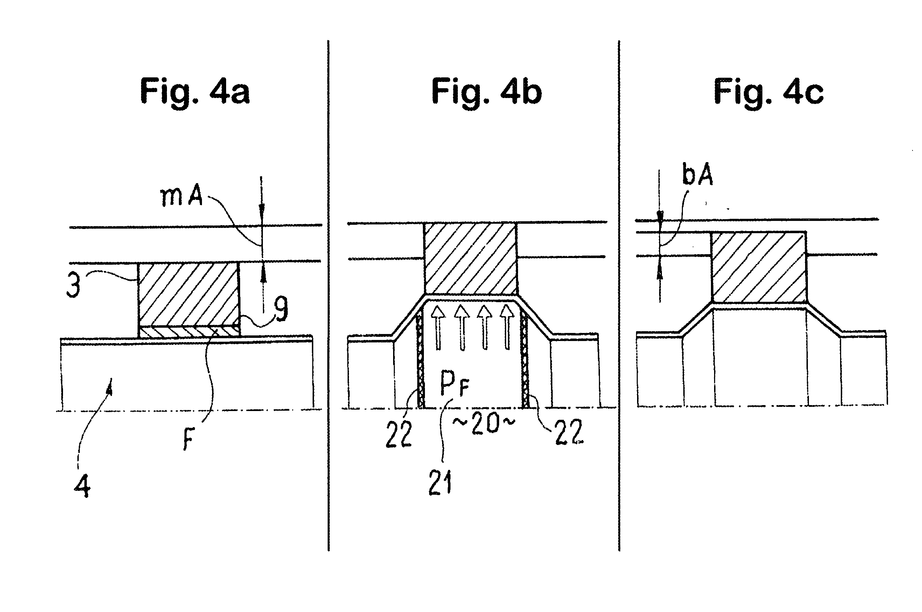

Die drei wesentlichen Phasen (Ausgangszustand, Fügeprozess, Endzustand) des Innenhochdruckfügens sind in den Figuren 4a - 4c dargestellt.

Der Innendurchmesser der Aufnahme 9a des Längslenkers 9 ist im unverformten Zustand etwas größer als der Außendurchmesser des zugeordneten endseitigen Kopplungsabschnitts 4 der Achse 2. Die Differenz F zwischen dem größeren Innendurchmesser der Aufnahme 9a und dem kleineren Außendurchmesser des Kopplungsabschnitts 4 wird als "Fügespiel" bezeichnet. Der Kopplungsabschnitt 4 kann zunächst noch anders geformt sein als eine Zylinderfläche, wobei allerdings sichergestellt sein muss, dass sich bei einem Aufweiten ein zylindrischer Körper ergibt.

Mit einer Aufweitlanze 20, wie sie an sich für das Innenhochdruckfügen bekannt ist, wird ein bestimmter Abschnitt 21 des Kopplungsabschnitts 4 verformt. In diesem Abschnitt 21 ist die Aufweitlanze 20 mit zwei Dichtungen 22 ausgestattet, die einen abgedichteten Bereich bilden. In den abgedichteten Bereich wird unter hohem Druck (1000 bis 2000 bar) eine Hydraulikflüssigkeit eingedrückt. Dabei verformt sich im Fügeprozess (Fig. 4b) der jeweilige Kopplungsabschnitt 4 der Achse 2 und drückt gegen die Innenperipherie der Aufnahme 9a des Verbindungsabschnitts 9, der sich dabei ebenfalls verformt und aufweitet.

Dabei ist vorausgesetzt, dass das Material, aus der jeweils der Verbindungsabschnitt 9 des Längslenkers 8 und die Achse 2 gebildet sind, bestimmte Rückfederungspotentiale aufweisen. Sobald die Druckflüssigkeit abgelassen wird, das heißt, der Druck nachlässt, verringert der Verbindungsabschnitt 9 seinen Durchmesser aufgrund der ihm verbliebenden Flexibilität, da seine Dehnung unterhalb des durch die Elastizitätsgrenze σ_{E} gegebenen Grenzwertes verblieben ist. Dabei drückt der Verbindungsabschnitt 9 auf das Material des Kopplungsabschnitts 4 der Achse 2. Hierbei wird von der maximalen Aufweitung bis zu der bleibenden Aufweitung (Fig. 4b - Fig. 4c) eine geringe Rückformung erzeugt. Dabei bleibt der Kopplungsabschnitt 4 fest mit der Innenseite des Verbindungsabschnitts 9 des Längslenkers in Verbindung und bildet eine drehfeste Fügung. Zusätzlich kann die Innenseite der Aufnahme 9a noch mit Kontakt erhöhenden Strukturen oder aber so geformt sein, dass die Innenfläche 18 des Verbindungsabschnitts eine Kreiszylinderfläche bildet und eine Aussparung aufweist, in die sich Material des Kopplungsabschnitts 4 nach dem Aufweiten lokal einschmiegt und eine formschlüssige Sicherung gegen Verdrehen sicherstellt.

In den Figuren 4a - 4c ist mit "mA" die maximale Aufweitung, mit "P_{F}" der Flüssigkeitsdruck und mit "bA" die nach der voranstehend beschriebenen Innenhochdruckverformung verbleibende Aufweitung angedeutet.

In den Figuren 5 bis 7 ist eine alternative Variante eines erfindungsgemäßen Achsaggregats 101 dargestellt. Auch das Achsaggregat 101 umfasst eine Achse 102 und zwei Längslenker 103,104.

Die Achse 102 ist aus einem ursprünglich zylindrischen, aus Stahl, beispielsweise einem S355-Stahl bestehenden Rohrprofil mit einer Wandstärke von 8 mm hergestellt. Sie weist einen mittig zwischen ihren Endabschnitten 105,106 angeordneten Torsionsabschnitt 107 auf, dessen Länge etwa die Hälfte der Gesamtlänge der Achse 102 einnimmt. Zur Herstellung dieses Torsionsabschnitts 107 ist das Rohrprofil in einer hier nicht dargestellten Presse zunächst so umgeformt worden, dass es im Bereich des Torsionsabschnitts einen rechtwinkligen, annähernd quadratischen Querschnitt aufwies, während die Endabschnitte unverändert zylindrisch geblieben sind. Anschließend ist in zwei gegenüberliegende Längswände des Torsionsabschnitts 107 jeweils eine Nut 108,109 eingedrückt worden. Die Tiefe der Nuten 108,109 ist dabei jeweils so gewählt worden, dass die den Grund der Nuten 108,109 bildenden Blechabschnitte eng benachbart zueinander achsparallel zur Längsachse L des Torsionsabschnitts 107 verlaufen. Auf diese Weise besitzt die Achse 102 in ihrem Torsionsabschnitt 107 ein niedrigeres Torsionswiderstandsmoment als ihre Endabschnitte 105,106. Die Achse 102 kann auf diese Weise nach Art einer Drehstabfeder zwischen den Längslenkern 103,104 wirken.

An den Endabschnitten 105,106 der Achse 102 ist jeweils ein zylindrischer Kopplungsabschnitt 110 vorgesehen, mit dem die Achse 2 in der Aufnahme 112 des jeweils zugeordneten Längslenkers 103,104 so sitzt, dass der jeweilige Endabschnitt 105,106 mit seiner Stirnseite seitlich frei über den zugeordneten Längslenker 103,104 hinaussteht. An die Stirnseite der Endabschnitte 105,106 ist jeweils ein Achsstummel 114,115 angeschweißt, der einen Lagerzapfen 116 zum Lagern eines Rades (nicht gezeigt) sowie einen Bremsträger 117 aufweist, an dem eine nicht gezeigte Bremse befestigt werden kann.

Die Längslenker 103,104 sind spiegelsymmetrisch zueinander als jeweils einstöckige Gussteile aus einem Sphärogusswerkstoff (Gusseisen mit Kugelgraphit, GJS) hergestellt.

Der Stahlwerkstoff, aus dem die Achse 102 gefertigt ist, und der Eisengusswerkstoff, aus dem die Längslenker 103,104 gegossen sind, sind dabei so aufeinander abgestimmt, dass der Elastizitätsmodul E_{L} des Gusswerkstoffs, aus dem die Längslenker 103,104 gegossen sind, geringer ist als der Elastizitätsmodul E_{A} des Stahls, aus der die Achse 102 mit ihren jeweils umgriffenen Kopplungsabschnitten 110 besteht, (E_{L} < E_{A}), alternativ oder ergänzend die Bruchfestigkeit Rm_{L} des Gussmaterials der Längslenker 103,104 größer ist als die Bruchfestigkeit Rm_{A} des Stahls der Achse 102 (Rm_{L} > Rm_{A}) sowie ebenfalls alternativ oder ergänzend die Streckgrenze R_{eS_L} des Eisengusswerkstoffs der Längslenker 103,104 höher ist als die Streckgrenze R_{eS_A} des Stahls der Achse 102 (R_{eS_L} > R_{eS_A}).

Ihre jeweilige Aufnahme 112 ist als Durchgangsöffnung in einen hülsenartigen Verbindungsabschnitt 118 des jeweiligen Längslenkers 103,104 so eingeformt, dass sie vollständig von Material des jeweiligen Verbindungsabschnitts 118 umgeben ist.

Im unverformten Zustand weisen die Kopplungsabschnitte 110 der Achse 102 einen Außendurchmesser auf, der kleiner ist als der Innendurchmesser der ihnen zugeordneten Aufnahme 112.

An den Verbindungsabschnitt 118 der Längslenker 103,104 ist jeweils ein quer zur Längsachse der jeweiligen Aufnahme 112 sich erstreckender Lenkerarm 119 angeschlossen, in dessen freien Endabschnitt ein Lagerauge 120 eingeformt ist. Über ihr Lagerauge 120 sind die Längslenker 103,104 in einer nicht gezeigten Lagerung an jeweils einem der Längsträger des hier ebenfalls nicht dargestellten Aufliegers um eine achsparallel zur Achse 102 ausgerichtete Schwenkachse S verschwenkbar gelagert.

In einem Übergangsbereich zum Verbindungsabschnitt 118 ist am Lenkerarm 119 zusätzlich eine Konsole 121 ausgebildet, in die ein Lagerauge 122 zum gelenkigen Anschluss eines hier nicht dargestellten Stoßdämpfers eingeformt ist.

Gegenüberliegend zum Lenkerarm 119 ist an den Verbindungsabschnitt 118 ein Tragarm 123 angeformt, der ebenfalls quer zur Längsachse der jeweiligen Aufnahme 112 ausgerichtet ist. An seinem freien Ende weist der Tragarm 122 eine Konsole 124 zum Abstützen eines nicht gezeigten Luftbalgs einer Luftfederung auf.

In die Innenfläche der jeweiligen Aufnahme 112 der Längslenker 103,104 ist jeweils eine längliche, nutartige Ausnehmung 125 eingeformt, die achsparallel zur Längsachse der Aufnahme 112 ausgerichtet ist. Die Ausnehmung 125 ist dabei in Bezug auf den Lenkerarm 119, den Tragarm 123 und den Verbindungsabschnitt 118 des jeweiligen Längslenkers 103,104 so ausgerichtet, dass die neutrale Faser der in der Praxis typischerweise auftretenden Biegespannungen durch sie verläuft.

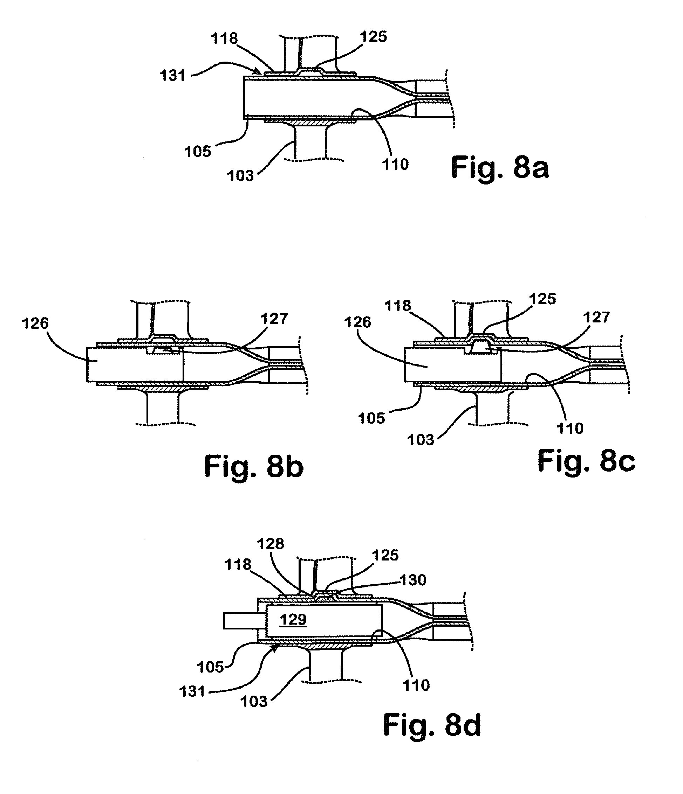

Zum Herstellen des Achsaggregates 101 wird zunächst der Endabschnitt 105 in die Aufnahme 112 des ersten Längslenkers 103 eingeschoben, bis sein Kopplungsabschnitt 110 mit Spiel in der Aufnahme 112 sitzt (Fig. 8a).

Anschließend wird von seiner offenen Stirnseite her ein Umformwerkzeug 126 in den vom Endabschnitt 105 umschlossenen Raum geführt. Das Umformwerkzeug 126 weist einen mittels eines hydraulischen Antriebs in radialer Richtung verstellbaren Stempel 127 auf, der bei in Arbeitsposition befindlichem Umformwerkzeug 126 gegenüberliegend zur Ausnehmung 125 des Längslenkers 103 ausgerichtet ist (Fig. 8b).

Sobald das Umformwerkzeug 127 positioniert ist, wird der Stempel 127 in radialer Richtung mit hohem Druck gegen die Innenfläche des Endabschnitts 105 bewegt. Das in dem von ihm beaufschlagten Bereich vorhandene Stahlmaterial des Kopplungsabschnitts 110 fließt dabei in die Ausnehmung 125, bis diese weitestgehend vollständig gefüllt ist (Fig. 8c).

Auf diese Weise wird am Kopplungsabschnitt 110 der Achse ein Vorsprung 128 gebildet, der formschlüssig in die korrespondierend geformte Ausnehmung 125 des Verbindungsabschnitts 118 des Längslenkers 103 eingeformt ist. Die so geschaffene formschlüssige Verbindung zwischen Achse 102 und Längslenker 103 dient als Sicherung für den Fall, dass die im Folgenden zu erzeugende kraftschlüssige Verbindung dieser beiden Bauteile den in der Praxis auftretenden Belastungen nicht standhalten sollte.

Nachdem der Vorsprung 128 erzeugt ist, wird das Umformwerkzeug 126 aus dem Endabschnitt 105 herausgezogen und in den Endabschnitt 105 eine Vorrichtung 129 zum Innenhochdruckumformen eingeführt. Die Vorrichtung 129 weist in an sich bekannter Weise ein zylindrisches, mit radial ausgerichteten Austritten für ein Druckfluid versehenes Gehäuse auf, um das eine aus einem flexiblen Dichtmaterial bestehende Manschette gelegt ist. Bei Druckbeaufschlagung legt sich die Manschette an die Innenfläche des Kopplungsabschnitts 110 an und stellt so sicher, dass das mit hohem Druck anstehende Druckfluid nicht in die Umgebung gelangt. Um eine Beschädigung der Manschette zu verhindern, kann die im Bereich des Vorsprungs 128 auf der Innenfläche des Kopplungsabschnitts 110 gegebenenfalls vorhandene Vertiefung mit einem inkompressiblen Formstoff 130 gefüllt sein.

Durch die von der Vorrichtung 129 ausgeführte Druckbeaufschlagung wird der Kopplungsabschnitt 110 in radialer Richtung aufgeweitet, bis seine Außenfläche dicht an der Innenfläche der Aufnahme 112 anliegt. Das zwischen der Innenfläche der Aufnahme 112 und der Außenfläche des Kopplungsabschnitts 110 im gefügten Zustand (Fig. 8a) bestehende Spiel S ist dabei so bemessen, dass die im Kopplungsabschnitt 110 mit Erreichen der Innenfläche der Aufnahme 112 vorhandenen Spannungen mindestens im Bereich der Streckgrenze R_{eS} des Stahls liegen, aus dem die Achse 102 gefertigt ist. Dementsprechend befindet sich der Kopplungsabschnitt 110 der Achse 102 mindestens am Anfang seiner plastischen Verformung.

Bei fortgesetzter Druckbeaufschlagung wird nun auch der den Kopplungsabschnitt 110 vollständig umgreifende Verbindungsabschnitt 118 des Längslenkers 103 aufgeweitet.

Dieser Vorgang wird fortgesetzt, bis in dem Verbindungsabschnitt 118 nach Entlastung Spannungen vorhanden sind, die zwar unterhalb der Dehngrenze R_{p0,2} des Gusswerkstoffs liegen, aus dem der Längslenker 103 gegossen ist, die jedoch so hoch sind, dass der dementsprechend nur elastisch verformte Verbindungsabschnitt 118 auf den plastisch verformten Kopplungsabschnitt 110 nach Entlastung eine Pressung ausübt, die ausreicht, um eine dauerhaft verdrehsichere kraftschlüssige Verbindung zwischen dem Längslenker 103 und der Achse 102 zu gewährleisten (Fig. 8d).

Nachdem auch die Vorrichtung 129 aus dem Endabschnitt 105 herausgezogen ist, kann der Achsstummel 114 an die Stirnseite des Endabschnitts 105 angeschweißt werden.

Die im Zuge des voranstehend beschriebenen Aufweitens hergestellte kraftschlüssige Verbindung ist so bemessen, dass es im Neuzustand noch zu im Mikrometerbereich liegenden Relativbewegungen zwischen Längslenker 103 und Achse 102 kommen kann. Diese verursachen im Fügespalt 131 Abrieb und Oxidationsprodukte, die mit fortschreitender Gebrauchsdauer den Fügespalt 131 immer stärker zusetzen. Auf diese Weise verfestigt sich die kraftschlüssige Verbindung zwischen dem Längslenker 103 und der Achse 102 immer mehr.

Der zweite Längslenker 104 wird anschließend in entsprechender Weise mit der Achse 102 verbunden.

| **BEZUGSZEICHEN** | **ELEMENT** |
|---|---|
| 1 | Achsaggregat |
| 2 | Achse |
| 4 | Kopplungsabschnitte der Achse 2. |
| 5 | Hohlprofil |
| 6 | Nutverformungen der Achse 2 |
| 6a | Torsionsabschnitt der Achse 2 |
| 8 | Längslenker |
| 9 | Verbindungsabschnitt des Längslenkers 8 |
| 9a | Aufnahme des Längslenkers 8 |
| 10 | Lenkerarm des Längslenkers 8 |
| 11 | Muffe des Längslenkers 8 |
| 12 | Halter des Längslenkers 8 |
| 13 | Tragteller des Längslenkers 8 |
| 14 | Schraubkranz |
| 15 | Achsstummel |
| 16 | Luftfederbalg |
| 17 | Bremsträger des Längslenkers 8 |
| 18 | Innenfläche der Aufnahme 9a |
| 19 | Öffnungen des Bremsträgers 17 |
| 20 | Aufweitlanze |
| 21 | Abschnitt des Kopplungsabschnitts 4 |
| 22 | Dichtungen |
| 101 | Achsaggregat |
| 102 | Achse |
| 103,104 | Längslenker |
| 105,106 | Endabschnitte |
| 107 | Torsionsabschnitt |
| 108,109 | Nuten |
| 110 | Kopplungsabschnitt |
| 112 | Aufnahmen |
| 114,115 | Achsstummel |
| 116 | Lagerzapfen |
| 117 | Bremsträger |
| 118 | Verbindungsabschnitt |
| 119 | Lenkerarm |
| 120 | Lagerauge |
| 121 | Konsole |
| 122 | Lagerauge |
| 123 | Tragarm |
| 124 | Konsole |
| 125 | Ausnehmung |
| 126 | Umformwerkzeug |
| 127 | Stempel |
| 128 | Vorsprung |
| 129 | Vorrichtung zum Innenhochdruckumformen |
| 130 | Formstoff |
| 131 | Fügespalt |
| S | Schwenkachse |
| mA | Maximale Aufweitung |
| P_{F} | Flüssigkeitsdruck |
| bA | bleibende Aufweitung |
| L | Längsachse |

## Patentansprüche

1. Achsaggregat für ein Nutzfahrzeug, mit einer aus einem ersten Metallwerkstoff gefertigten Achse (2;102) und mit mindestens einem aus einem zweiten Metallwerkstoff gefertigten Längslenker (8;103,104), der einen Verbindungsabschnitt (9;118) mit einer Aufnahme (9a;112) aufweist, in der die Achse (2;102) mit einem hohlen Kopplungsabschnitt (4;110) so sitzt, dass die Achse (2;102) und der Längslenker (8;103,104) drehfest miteinander verbunden sind, **dadurch gekennzeichnet,**
- **dass** mindestens eine der folgenden Bedingungen erfüllt ist:
a) der Elastizitätsmodul E_{L} des Metallwerkstoffs, aus dem der Verbindungsabschnitt (9;118) des Längslenkers (8;103,104) besteht, ist geringer als der Elastizitätsmodul E_{A} des Metallwerkstoffs des von ihm umgriffenen Kopplungsabschnitts (4;110) der Achse (2;102);
b) die Bruchfestigkeit Rm des Metallwerkstoffs des Verbindungsabschnittes (9;118) des Längslenkers (8;103,104) ist größer als die Bruchfestigkeit Rm des Metallwerkstoffs des Kopplungsabschnitts (4;110) der Achse;
c) die Streckgrenze R_{eS} oder - sofern der Metallwerkstoff keine ausgeprägte Streckgrenze aufweist - die Dehngrenze Rₚ₀,₂ des Metallwerkstoffs, aus dem der Verbindungsabschnitt (9;118) des Längslenkers (8;103,104) besteht, ist höher als die Streckgrenze R_{eS} bzw. Dehngrenze Rp₀,₂ des Metallwerkstoffs des von ihm umgriffenen Kopplungsabschnitts (4;110) der Achse (2;102)
und
- **dass** der Längslenker (8;103,104) in Folge einer Umformoperation mindestens im Bereich seines Verbindungsabschnitts (9;118) unter einer elastischen Spannung steht, während die Achse (2;102) durch ein Aufweiten mindestens im Bereich ihres vom Längslenker (8;103,104) umgriffenen Kopplungsabschnitts (4;110) bleibend plastisch verformt ist, so dass der Längslenker (8;103,104) und die Achse (2;102) alleine durch Kraftschluss drehfest miteinander verbunden sind,
wobei jeweils optional
- der Längslenker (8;103,104)zusätzlich zu der kraftschlüssigen Verbindung formschlüssig mit dem Kopplungsabschnitt (4;110) der Achse (2;102) verbunden ist, indem ein Formelement (128) der Achse (2;102)formschlüssig mit einem korrespondierend geformten Formelement (125) des Längslenkers (8;103,104)zusammenwirkt, und/oder
- die kraftschlüssige Verbindung zwischen dem Längslenker (8;103,104) und dem von ihm umgriffenen Abschnitt der Achse (2;102) im Neuzustand derart bemessen ist, dass es im Einsatz des Achsaggregats (1;101) zu einer im Mikrometerbereich liegenden Relativbewegung zwischen der Achse (2;102) und dem Längslenker (8;103,104) kommt, durch die sich im Fügespalt (131) festsitzender, die Relativbewegung im Weiteren erschwerender Abrieb bildet.

2. Achsaggregat nach Anspruch 1, **dadurch gekennzeichnet, dass** das Formelement der Achse (2;102) ein durch ein Kaltumformen erzeugter, in radialer Richtung nach außen gerichteter Vorsprung (128) und das korrespondierend geformte Formelement des Längslenkers (8;103,104)eine Ausnehmung (125) ist, in die der Vorsprung der Achse (2;102) formschlüssig greift.

3. Achsaggregat nach Anspruch 2, **dadurch gekennzeichnet, dass** die Ausnehmung (125) in die Innenumfangsfläche des Verbindungsabschnittes (9;118) des Längslenkers (8;103,104) eingeformt ist.

4. Achsaggregat nach einem der voranstehenden Ansprüche, **dadurch gekennzeichnet, dass** die Achse (2;102) als einstückiges Hohlprofil ausgebildet ist.

5. Achsaggregat nach Anspruch 4, **dadurch gekennzeichnet, dass** die Achse (2;102) einen gegenüber ihrem Kopplungsabschnitt (4;110) torsionsweicheren Torsionsabschnitt (6a;107) aufweist.

6. Achsaggregat nach Anspruch 5, **dadurch gekennzeichnet, dass** zwei Längslenker (8;103,104) vorgesehen sind, die jeweils einen der Endabschnitte der Achse (2;102) umgreifen, und **dass** der Torsionsabschnitt (6a;107) zwischen den Endabschnitten (105,106) angeordnet ist.

7. Achsaggregat nach einem der voranstehenden Ansprüche, **dadurch gekennzeichnet, dass** der Längslenker (8;103,104) einstückig hergestellt ist.

8. Achsaggregat nach einem der voranstehenden Ansprüche, **dadurch gekennzeichnet, dass** der Längslenker (8;103,104) aus einem Eisengusswerkstoff, insbesondere einem Sphärogusswerkstoff, besteht.

9. Verfahren zum Herstellen eines gemäß einem der Ansprüche 1 bis 8 ausgebildeten Achsaggregats (1;101), umfassend folgende Arbeitsschritte:
a) Zurverfügungstellen einer Achse (2;102), die mindestens einen hohlen und von außen zugänglichen Kopplungsabschnitt (4;110) aufweist;
b) Zurverfügungstellen eines Längslenkers (8;103,104), der eine Aufnahme (9a;112) für den Kopplungsabschnitt (4;110) der Achse (2;102) aufweist,
- wobei die lichte Weite der Aufnahme (9a;112) in Relation zu den Außenabmessungen des Kopplungsabschnitts (4;110) der Achse (2;102) so bemessen ist, dass der Kopplungsabschnitt (4;110) der Achse (2;102) mit Spiel in die Aufnahme (9a;112) einführbar ist, und mindestens eine der folgenden Bedingungen erfüllt ist:
b.a) der Elastizitätsmodul E_{L} des Metallwerkstoffs, aus dem der Verbindungsabschnitt (9;118) des Längslenkers (8;103,104) besteht, ist geringer als der Elastizitätsmodul E_{A} des Metallwerkstoffs des von ihm umgriffenen Kopplungsabschnitts (4;110) der Achse (2;102) ;
b.b) die Bruchfestigkeit Rm des Metallwerkstoffs des Verbindungsabschnittes (9;118) des Längslenkers (8;103,104) ist größer als die Bruchfestigkeit Rm des Metallwerkstoffs des Kopplungsabschnitts (4;110) der Achse;
b.c) die Streckgrenze R_{eS} oder - sofern der Metallwerkstoff keine ausgeprägte Streckgrenze aufweist - die Dehngrenze Rp₀,₂ des Metallwerkstoffs, aus dem der Verbindungsabschnitt (9;118) des Längslenkers (8;103,104) besteht, ist höher als die Streckgrenze R_{eS} bzw. Dehngrenze Rp₀,₂ des Metallwerkstoffs des von ihm umgriffenen Kopplungsabschnitts (4;110) der Achse (2;102) ;
c) Fügen von Längslenker (8;103,104) und Achse (2;102), so dass der Kopplungsabschnitt (4;110) der Achse (2;102) in der Aufnahme des Längslenkers (8;103,104) sitzt;
d) Aufweiten des Kopplungsabschnitts (4;110) der Achse (2;102) bis der Fügespalt zwischen der Innenfläche der Aufnahme des Längslenkers (8;103,104) und der Außenfläche des Kopplungsabschnitts (4;110) der Achse (2;102) geschlossen ist;
e) darauf folgende Fortsetzung der Aufweitung so weit, bis der Verbindungsabschnitt (9;118) des Längslenkers (8;103,104) nach Entlastung elastisch und der Kopplungsabschnitt (4;110) der Achse (2;102) bleibend plastisch verformt sind, so dass der Verbindungsabschnitt (9;118) unter einer elastischen Spannung steht, so dass der Längslenker (8;103,104) und die Achse (2;102) alleine durch eine kraftschlüssige Verbindung miteinander verbunden sind.

10. Verfahren nach Anspruch 9, **dadurch gekennzeichnet, dass** in die Innenfläche der Aufnahme (9a;112) des Längslenkers (8;103,104) eine Ausnehmung (125) eingeformt ist und **dass** nach dem Fügen an dem Kopplungsabschnitt (4;110) der Achse (2;102) ein Vorsprung (128) erzeugt wird, der in diese Ausnehmung (125) greift.

11. Verfahren nach Anspruch 10, **dadurch gekennzeichnet, dass** der Vorsprung (128) vor dem Aufweiten des Kopplungsabschnitts (4;110) der Achse (2;102) erzeugt wird.

12. Verfahren nach einem der Ansprüche 9 bis 11, **dadurch gekennzeichnet, dass** das Aufweiten des Kopplungsabschnitts (4;110) der Achse (2;102) durch ein Innenhochdruckverfahren bewirkt wird.

## Claims

1. Axle assembly for a commercial vehicle, comprising an axle (2; 102) produced from a first metal material and at least one trailing link (8; 103, 104) produced from a second metal material which has a connecting portion (9; 118) with a seat (9a; 112) in which the axle (2; 102) sits with a hollow coupling portion (4; 110) such that the axle (2; 102) and the trailing link (8; 103, 104) are in torque-proof engagement with one another, **characterised**
- **in that** at least one of the following conditions is met:
a) the modulus of elasticity E_{L} of the metal material from which the connecting portion (9; 118) of the trailing link (8; 103, 104) is made, is lower than the modulus of elasticity E_{A} of the metal material of the coupling portion (4; 110), encompassed thereby, of the axle (2; 102);
b) the breaking strength Rm of the metal material of the connecting portion (9; 118) of the trailing link (8; 103, 104) is greater than the breaking strength Rm of the metal material of the coupling portion (4; 110) of the axle;
c) the yield strength R_{eS} or, if the metal material does not have a clearly defined yield strength, the proof stress Rp_{0.2} of the metal material, from which the connecting portion (9; 118) of the trailing link (8; 103, 104) is made, is higher than the yield strength Rₑₛ or proof stress Rp_{0.2} of the metal material of the coupling portion (4; 110), encompassed thereby, of the axle (2; 102)
and
- **in that** the trailing link (8; 103, 104) is under an elastic stress at least in the region of its connecting portion (9; 118) as the result of a forming operation, while the axle (2; 102) is deformed in a permanently plastic manner at least in the region of its coupling portion (4; 110) encompassed by the trailing link (8; 103, 104) by a widening procedure, such that the trailing link (8; 103, 104) and the axle (2; 102) are in torque-proof engagement with one another by a solely frictional connection, wherein in each case optionally
the trailing link (8; 103, 104) is not only connected non-positively to the coupling portion (4; 110) of the axle (2; 102) but is also connected positively thereto, in that a moulded element (128) of the axle (2; 102) cooperates positively with the correspondingly formed moulded element (125) of the trailing link (8; 103, 104) and/or
- the non-positive connection between the trailing link (8; 103, 104) and the portion, encompassed thereby, of the axle (2; 102) is calculated, when new, such that when the axle assembly (1; 101) is used, a relative movement in the micrometer range arises between the axle (2; 102) and the trailing link (8; 103, 104), as a result of which abraded particles form which are trapped in the joining gap (131) and further impede the relative movement.

2. Axle assembly according to claim 1, **characterised in that** the moulded element of the axle (2; 102) is a projection (128) which projects outwards in the radial direction and is produced by cold-forming and the correspondingly formed moulded element of the trailing link (8; 103, 104) is a recess (125) into which the projection of the axle (2; 102) engages positively.

3. Axle assembly according to claim 2, **characterised in that** the recess (125) is moulded into the inner peripheral surface of the connecting portion (9; 118) of the trailing link (8; 103, 104).

4. Axle assembly according to any one of the preceding claims, **characterised in that** the axle (2; 102) is configured as an integral hollow profile.

5. Axle assembly according to claim 4, **characterised in that** the axle (2; 102) has a torsional portion (6a; 107) which is more flexible in torsion compared to its coupling portion (4; 110).

6. Axle assembly according to claim 5, **characterised in that** two trailing links (8; 103, 104) are provided which each engage around one of the end portions of the axle (2; 102), and **in that** the torsional portion (6a; 107) is arranged between the end portions (105, 106).

7. Axle assembly according to any one of the preceding claims, **characterised in that** the trailing link (8; 103, 104) is produced integrally.

8. Axle assembly according to any one of the preceding claims, **characterised in that** the trailing link (8; 103, 104) consists of a cast iron material, in particular a ductile iron material.

9. Method for producing an axle assembly (1; 101) configured according to any one of claims 1 to 8, comprising the following steps:
a) the provision of an axle (2; 102) which has at least one hollow and externally accessible coupling portion (4; 110);
b) the provision of a trailing link (8; 103, 104) which has a seat (9a; 112) for the coupling portion (4; 110) of the axle (2; 102),
- wherein the clearance of the seat (9a; 112) in relation to the external dimensions of the coupling portion (4; 110) of the axle (2; 102) is calculated such that the coupling portion (4; 110) of the axle (2; 102) can be introduced with clearance into the seat (9a; 112), and at least one of the following conditions is met:
b.a) the modulus of elasticity E_{L} of the metal material from which the connecting portion (9; 118) of the trailing link (8; 103, 104) is produced, is less than the modulus of elasticity E_{A} of the metal material of the coupling portion (4; 110) encompassed thereby, of the axle (2; 102);
b.b) the breaking strength Rm of the metal material of the connecting portion (9; 118) of the trailing link (8; 103, 104) is greater than the breaking strength Rm of the metal material of the coupling portion (4; 110) of the axle;
b.c) the yield strength R_{eS} or, if the metal material does not have a clearly defined yield strength, the proof stress R_{p0.2} of the metal material, from which the connecting portion (9; 118) of the trailing link (8; 103, 104) is produced, is higher than the yield strength R_{eS} or proof stress R_{p0.2} of the metal material of the coupling portion (4; 110), encompassed thereby, of the axle (2; 102);
c) the joining of trailing link (8; 103, 104) and axle (2; 102) such that the coupling portion (4; 110) of the axle (2; 102) sits in the seat of the trailing link (8; 103, 104);
d) the widening of the coupling portion (4; 110) of the axle (2; 102) until the joining gap between the inner surface of the seat of the trailing link (8; 103, 104) and the outer surface of the coupling portion (4; 110) of the axle (2; 102) is closed;
e) the subsequent continuation of the widening procedure until the connecting portion (9; 118) of the trailing link (8; 103, 104) after unloading is elastically deformed and the coupling portion (4; 110) of the axle (2; 102) is deformed in a permanently plastic manner such that the connecting portion (9; 118) is under an elastic stress such that the trailing link (8; 103, 104) and the axle (2; 102) are in engagement with one another by a solely frictional connection.

10. Method according to claim 9, **characterised in that** moulded into the inner surface of the seat (9a; 112) of the trailing link (8; 103, 104) is a recess (125) and **in that** after the joining procedure, a projection (128) is produced on the coupling portion (4; 110) of the axle (2; 102), which projection (128) engages in this recess (125).

11. Method according to claim 10, **characterised in that** the projection (128) is produced before the coupling portion (4; 110) of the axle (2; 102) is widened.

12. Method according to any one of claims 9 to 11, **characterised in that** the coupling portion (4; 110) of the axle (2; 102) is widened by an internal high pressure process.

## Revendications

1. Groupe d'axes pour un véhicule utilitaire, avec un axe (2; 102), qui consiste en un premier matériau métallique et avec au moins un bras longitudinal (8; 103, 104), qui consiste en un deuxième matériau métallique, lequel est doté d'une section de liaison (9, 118) pourvue d'un réceptacle (9a; 112), dans lequel est placé l'axe (2; 102) avec une section de couplage (4; 110) de sorte que l'axe (2; 102) et le bras longitudinal (8; 103, 104) soient reliés ensemble, solidaires en rotation, **caractérisé en ce qu'**au moins l'une des conditions suivantes est remplié :
a) le module d'élasticité Eᵣ du matériau métallique, dont est formée la section de liaison (9, 118) du bras longitudinal (8; 103, 104), est inférieur au module d'élasticité E_{A} du matériau métallique de la section de couplage (4; 110) de l'axe (2; 102), qui est enveloppée par lui;
b) la résistance à la rupture Rm du matériau métallique de la section de liaison (9, 118) du bras longitudinal (8; 103, 104) est supérieure à la résistance à la rupture Rm du matériau métallique de la section de couplage (4; 110) de l'axe;
c) la limite d'étirage R_{eS} ou - pour autant que le matériau métallique ne présente pas de limite d'étirage considérable - la limite d'élasticité R_{p0,2} du matériau métallique, dont est formée la section de liaison (9, 118) du bras longitudinal (8; 103, 104), est supérieure à la limite d'étirage Rₑₛ, respectivement à la limite d'élasticité R_{p0,2} du matériau métallique de la section de couplage (4; 110) de l'axe (2; 102), qui est enveloppée par lui;
et
- **en ce que** le bras longitudinal (8; 103, 104), à la suite d'un processus de transformation, est sous tension élastique, au moins dans la région de sa section de liaison (9, 118), tandis que l'axe (2; 102) est déformé plastiquement, en permanence, par un élargissement, prévu au moins dans la région de sa section de couplage (4; 110), enveloppée par le bras longitudinal (8; 103, 104), de sorte que ledit bras longitudinal (8; 103, 104) et l'axe (2; 102) soient reliés ensemble, solidaires en rotation, rien que par connexion par friction,
sachant que, chaque fois, en option
- le bras longitudinal (8; 103, 104) est relié à la section de couplage (4; 110) de l'axe (2; 102) non seulement par adhérence, mais, en plus, par engagement géométrique, du fait qu'un élément façonné (128) de l'axe (2; 102) coopère, par emboîtement, avec un l'élément façonné (125) du bras longitudinal (8; 103, 104), qui présente une forme correspondante, et / ou
- la liaison par adhérence entre le bras longitudinal (8; 103, 104) et la section de l'axe (2; 102) entourée par lui, est dimensionnée, à l'état neuf, de sorte que, lors de la mise en oeuvre du groupe d'axes (1; 101), un mouvement relatif, situé dans un domaine micrométrique, a lieu entre l'axe (2; 102) et le bras longitudinal (8; 103, 104), ce dont résulte une abrasion, qui, s'incrustant dans la fente de jointoiement (131), rend le mouvement relatif plus difficile.

2. Groupe d'axes selon la revendication 1, **caractérisé en ce que** l'élément façonné de l'axe (2; 102) est une saillie (128), obtenue par formage à froid, qui est orientée, vers l'extérieur, dans la direction radiale, et que l'élément façonné de manière correspondante du bras longitudinal (8; 103, 104) est un évidement (125), dans lequel la saillie de l'axe (2; 102) s'emboite en engagement géométrique.

3. Groupe d'axes selon la revendication 2, **caractérisé en ce que** l'évidement (125) est formé dans la surface périphérique intérieure de la section de liaison (9, 118) du bras longitudinal (8; 103, 104).

4. Groupe d'axes selon l'une des revendications précédentes, **caractérisé en ce que** l'axe (2; 102) est réalisé en tant que profilé creux d'une pièce.

5. Groupe d'axes selon la revendication 4, **caractérisé en ce que** l'axe (2; 102) présente une section de torsion (6a; 107) plus souple à la torsion par rapport à sa section de couplage (4; 110).

6. Groupe d'axes selon la revendication 5, **caractérisé en ce que** sont prévus deux bras longitudinaux (8; 103, 104), qui entourent chacun l'une des extrémités de l'axe (2; 102), et que la section de torsion (6a; 107) est disposée entre les extrémités (105, 106).

7. Groupe d'axes selon l'une des revendications précédentes, **caractérisé en ce que** le bras longitudinal (8; 103, 104) est fabriqué d'une pièce.

8. Groupe d'axes selon l'une des revendications précédentes, **caractérisé en ce que** le bras longitudinal (8; 103, 104) consiste en un matériau en fonte, en particulier, en un matériau en fonte sphérolithique.

9. Procédé de fabrication d'un groupe d'axes (1; 101), formé selon l'une des revendications 1 à 8, qui comprend les phases de travail suivantes:
a) mise à disposition d'un axe (2; 102), qui est doté d'au moins une section de couplage (4; 110) creuse et accessible de l'extérieur;
b) mise à disposition d'un bras longitudinal (8; 103, 104), qui présente un réceptacle (9a; 112) pour la section de couplage (4; 110) de l'axe (2; 102) ;
- sachant que la largeur intérieure du réceptacle (9a; 112) est dimensionnée en fonctions des dimensions extérieures de la section de couplage (4; 110) de l'axe (2; 102), de sorte que ladite section de couplage (4; 110) de l'axe (2; 102) puisse être introduite avec jeu dans le réceptacle (9a; 112), et qu'au moins l'une des conditions suivantes soit remplie :
b.a) le module d'élasticité E_{L} du matériau métallique, en lequel consiste la section de liaison (9, 118) du bras longitudinal (8; 103, 104), est inférieur au module d'élasticité E_{A} du matériau métallique de la section de couplage (4; 110) de l'axe (2; 102) enveloppée par lui;
b.b) la résistance à la rupture Rm du matériau métallique de la section de liaison (9, 118) du bras longitudinal (8; 103, 104) est supérieure à la résistance à la rupture Rm du matériau métallique de la section de couplage (4; 110) de l'axe ;
b.c) la limite d'étirage R_{eS} ou - pour autant que le matériau métallique ne présente pas de limite d'étirage considérable - la limite d'élasticité R_{p0,2} du matériau métallique, qui forme la section de liaison (9, 118) du bras longitudinal (8; 103, 104), est supérieure à la limite d'étirage R_{eS}, respectivement à la limite d'élasticité R_{p0,2} du matériau métallique de la section de couplage (4; 110) de l'axe (2; 102) enveloppée par lui;
c) assemblage du bras longitudinal (8; 103, 104) et de l'axe (2; 102), de sorte que la section de couplage (4; 110) de l'axe (2; 102) soit placé dans le réceptacle du bras longitudinal (8; 103, 104) ;
d) élargissement de la section de couplage (4; 110) de l'axe (2; 102) jusqu'à ce que la fente de jointoiement entre la face intérieure du réceptacle du bras longitudinal (8; 103, 104) et la face extérieure de la section de couplage (4; 110) de l'axe (2; 102) soit fermée ;
e) puis, poursuite de l'élargissement jusqu'à ce que la section de liaison (9, 118) du bras longitudinal (8; 103, 104) soit élastique, après décharge, et que la section de couplage (4; 110) de l'axe (2; 102) soit déformée plastiquement en permanence, de sorte que le bras longitudinal (8; 103, 104) et l'axe (2; 102) soient reliés ensemble uniquement par adhérence.

10. Procédé selon la revendication 9, **caractérisé en ce qu'**un évidement (125) est formé dans la face intérieure du logement (9a; 112) du bras longitudinal (8; 103, 104), et qu'une saillie (128), qui s'engage dans cet évidement (125), est réalisée après l'assemblage à la section de couplage (4; 110) de l'axe (2; 102).

11. Procédé selon la revendication 10, **caractérisé en ce que** la saillie (128) est réalisée avant l'élargissement de la section de couplage (4; 110) de l'axe (2; 102).

12. Procédé selon l'une des revendications 9 à 11, **caractérisé en ce que** l'élargissement de la section de couplage (4; 110) de l'axe (2; 102) est réalisé selon un procédé haute pression interne.
